# EUROPEAN PATENT SPECIFICATION

(11) **EP 2 924 133 B1**
(45) Date of publication and mention of the grant of the patent: **02.01.2019**
(21) Application number: 13857192.2
(22) Date of filing: 29.07.2013
(51) Int. Cl.: C22B 3/24, C22B 23/00

(54) **SETTLING SEPARATION METHOD FOR NUETRALIZED SLURRY AND WET SMELTING METHOD FOR NICKEL OXIDE ORE**
ABLAGERUNGSTRENNVERFAHREN FÜR NEUTRALISIERTEN SCHLAMM UND NASSSCHMELZVERFAHREN FÜR NICKELOXIDERZ
PROCÉDÉ DE SÉPARATION PAR DÉCANTATION DE BOUE NEUTRALISÉE ET PROCÉDÉ DE FUSION À L'ÉTAT HUMIDE DE MINERAI D'OXYDE DE NICKEL

(30) Priority: 20.11.2012 JP 2012254569
(43) Date of publication of application: 30.09.2015
(73) Proprietor: Sumitomo Metal Mining Co., Ltd., Tokyo 105-8716 (JP)
(72) Inventor: SHOJI, Hirofumi, Niihama-shi Ehime 792-0002 (JP); HIGAKI, Tatsuya, Niihama-shi Ehime 792-0002 (JP); OZAKI, Yoshitomo, Niihama-shi Ehime 792-0002 (JP); ENOMOTO, Manabu, Niihama-shi Ehime 792-0002 (JP)
(74) Representative: Müller-Boré & Partner Patentanwälte PartG mbB
(86) International application number: PCT/JP2013/070476
(87) International publication number: WO 2014/080665

(56) References cited:
- WO-A1-81/02153
- WO-A1-2008/003160
- JP-A- H05 125 464
- JP-A- 2002 256 353
- JP-A- 2009 102 742
- A Taylor ET AL: "FUTURE TRENDS IN PAL PLANT DESIGN FOR NI/CO LATERITES", , 1 January 2000 (2000-01-01), XP055184496, Retrieved from the Internet: URL:http://www.altamet.com.au/wp-content/u ploads/2012/12/Future-Trends-in-PAL-Plant- Design-for-Ni-Co-Laterites.pdf [retrieved on 2015-04-21]
- M.J. PEARSE: "An overview of the use of chemical reagents in mineral processig", MINERALS ENGINEERING, vol. 18, 2005, pages 139-149, XP002759434,
- OUSTADAKIS P ET AL: "Nickel and cobalt precipitation from sulphate leach liquor using MgO pulp as neutralizing agent", MINERALS ENGINEERING, PERGAMON PRESS , OXFORD, GB, vol. 19, no. 11, 1 August 2006 (2006-08-01), pages 1204-1211, XP024902717, ISSN: 0892-6875, DOI: 10.1016/J.MINENG.2005.11.006 [retrieved on 2006-08-01]

## Description

The present invention relates to a settling separation process for a neutralized slurry, and to a hydrometallurgical process for a nickel oxide ore. More specifically, the present invention relates to a settling separation process for a neutralized slurry obtained by performing a neutralization step for a leachate obtained by the leaching of nickel and cobalt from a nickel oxide ore; and to a hydrometallurgical process for a nickel oxide ore, in which the above process is applied.

The present application claims a priority based on Japanese Patent Application No. 2012-254569 filled on November 20, 2012 in Japan.

As a recovery process of a valuable metal from a nickel oxide ore, a high pressure acid leach process (hereinafter, referred to as "HPAL process") has been performed. In a HPAL process, in order to efficiently recover the nickel and cobalt that are valuable metals, operation in which an excess acid concentration is maintained at 25 to 50 g/L at the end time of the leaching has been performed (for example, see Patent document 1).

Accordingly, the excess acid contained in a leachate is neutralized by the addition of a neutralizing agent such as alkali in a neutralization step. Herein, as the neutralizing agent used for the neutralization step, an inexpensive Ca-based agent represented by calcium carbonate is employed in many cases. However, in a case where the leach slurry is a sulfuric acid solution, a large amount of gypsum is generated as a by-product, therefore, large equipment is required for the solid-liquid separation after neutralization.

Further, in recent years, in view of a short supply of iron ores, and the like, leach residues having hematite as a main component, which are generated by a HPAL process, are expected to be utilized as a raw material of iron and steel. However, in the leach residues, many components other than the hematite are contained, therefore, it is desired to efficiently separate the hematite from these components. In particular, sulfur in leach residues has a problem that sulfur dioxide is generated in a steel making step, and the like, therefore, it is desired to perform the separation so as not to contain sulfur as much as possible (for example, see Patent document 2).

In view of such social conditions, as a neutralizing agent used in a HPAL process, a neutralizing agent with which gypsum such as a calcium oxide is not generated as a by-product, a so-called Ca-less neutralizing agent, is attracting attention.

For example, in Patent document 3, a recovery process containing a preliminary neutralization step in which the pH of the solution obtained in the previous step is increased by using a magnesium oxide is shown.

However, in the neutralization using a magnesium oxide, although impurity components in a leachate can effectively be formed as a neutralized precipitate, when the neutralized precipitate is subjected to solid-liquid separation in a postprocess there is a problem of generation of filtration failure such as clogging of filter cloth, or generation of decrease of filtering speed. Further, there is a problem that the neutralized precipitate is mixed into a supernatant after solid-liquid separation as SS (suspended solid), and causes further filtration failure or further decrease of filtering speed. Accordingly, a process in which a neutralized precipitate formed by a neutralization step can effectively be separated and removed while inhibiting filtration failure is required.

Patent document 1: Japanese Patent No. 4525428
Patent document 2: Japanese Patent Application Laid-Open (JP-A) No. 2010-95788
Patent document 3: JP-A No. 2007-77459
JP H05 125464 A describes a treatment of magnesia nickel silicate ore.
JP 2009 102742 A describes a leaching method and a recovery method for Ni or Co.

The present invention is proposed in order to solve the problems described above. An object of the present invention is to provide a settling separation process for a neutralized slurry in which a neutralization step is efficiently performed for a leachate obtained by the leaching of nickel and cobalt from a nickel oxide ore, and further a neutralized precipitate obtained by precipitation of impurity components can effectively be separated and removed while inhibiting filtration failure and the like; and to provide a hydrometallurgical process for a nickel oxide ore, in which the above process is applied.

The present inventors have conducted intensive studies in order to achieve the object described above. As a result, the present inventors found that a neutralization step is performed for a leachate by using a magnesium oxide as a neutralizing agent to obtain a slurry after neutralization step (neutralized slurry), a cationic flocculant is added into the slurry to improve the filterability of the formed neutralized precipitate, and consequently the neutralized precipitate is effectively separated and removed; and thus have completed the present invention.

That is, the settling separation process for a neutralized slurry according to the present invention is a settling separation process for a neutralized slurry obtained by performing a neutralization step for a leachate obtained by leaching of nickel and cobalt from a nickel oxide ore, including: performing a neutralization step for the leachate by using a magnesium oxide to obtain a neutralized slurry; and separating and removing a neutralized precipitate by adding a cationic flocculant into the neutralized slurry; wherein an additive amount of the cationic flocculant is 650 to 1350 g/t (solid content) with respect to a solid content of a leach slurry.

Herein, as the magnesium oxide, the one obtained by the grinding of a bed rock of the nickel oxide ore can be used.

Further, as the leachate, the leachate obtained by the leaching of nickel and cobalt from the nickel oxide ore by a high-temperature high-pressure acid leaching process using a sulfuric acid solution can be used.

Further, the additive amount of the cationic flocculant is preferably 900 to 1100 g/t (solid content) with respect to a solid content of the leach slurry.

Further, the hydrometallurgical process for a nickel oxide ore according to the present invention is a hydrometallurgical process for a nickel oxide ore, in which the hydrometallurgical process performs recovery of nickel and cobalt from a nickel oxide ore by a high-temperature high-pressure acid leaching process containing a leaching step, a solid-liquid separation step, and a neutralization step, the neutralization step comprising the settling separation process according to the present invention.

According to the present invention, a neutralization step is performed for a leachate containing nickel and cobalt by using a magnesium oxide as a neutralizing agent, and a cationic flocculant is added into the neutralized slurry so as to separate and remove the neutralized precipitate, therefore, the filtration failure and the decrease of the filtering speed are inhibited, and the neutralized precipitate can effectively be separated and removed.

Further, by the adjustment of the additive amount of the cationic flocculant, the SS concentration can effectively be decreased, and the clogging of filter cloth, and the like are prevented and the filterability is further improved, as a result, a mother liquor for the recovery of nickel and cobalt with high clarity can be obtained by the high productivity.

Fig. 1 is a process chart of a hydrometallurgical process for a nickel oxide ore.
Fig. 2 is a graph chart showing a relationship between the SS concentration (mg/L) for the additive amount of a cationic flocculant and the filtration time (seconds).

Hereinafter, a specific embodiment (hereinafter, referred to as "the present embodiment") applying the settling separation process for a neutralized slurry according to the present invention will be described in detail in the following order. Further, the present invention is not limited to the following embodiment, and appropriate changes may be made as long as the spirit of the present invention is not changed.
1. Overview
2. Hydrometallurgical process for nickel oxide ore
3. Settling separation process for neutralized slurry
   3-1. Neutralization step
   3-2. Solid-liquid separation step

### <1. Overview>

The settling separation process for a neutralized slurry according to the present embodiment is a settling separation process for a neutralized slurry obtained by a neutralization step for a leachate that is obtained by the leaching of nickel and cobalt from a nickel oxide ore by a leaching step using a sulfuric acid solution and the like.

Specifically, in the settling separation process for a neutralized slurry, a neutralization step is performed for a leachate obtained by the leaching of nickel and cobalt form a nickel oxide ore by using a magnesium oxide to obtain a neutralized slurry, and a neutralized precipitate is separated and removed by the addition of a cationic flocculant into the final neutralized slurry.

According to such a process, a neutralization step for a leachate can efficiently be performed, and further the formed neutralized precipitate can effectively be separated and removed while inhibiting the generation of filtration failure and the like.

Further, according to the process, by the adjustment of the additive amount of the cationic flocculant that is added to a neutralized slurry, the SS (suspended solid) concentration in the supernatant can effectively be decreased, and a solution after neutralization step with high clarity, that is, a mother liquor for the recovery of nickel and cobalt can be obtained. In addition, as described above, the SS concentration can be decreased, therefore, also in a solid-liquid separation step for separating and removing a neutralized precipitate, the clogging of the filter cloth used for the step, and the like are prevented, the filtration failure or the decrease of the filtering speed can effectively be inhibited, as a result, a mother liquor with high clarity can be obtained by the high productivity.

Hereinafter, more specifically, the settling separation process for a neutralized slurry will be described, however, prior to the description, a hydrometallurgical process for a nickel oxide ore, which can apply the settling separation process, will be described. It is noted that in the following hydrometallurgical process for a nickel oxide ore, an embodiment in which nickel and cobalt are recovered by a high-temperature high-pressure acid leaching process (HPAL process) using a sulfuric acid solution is shown as a specific example.

### <2. Hydrometallurgical process of nickel oxide ore>

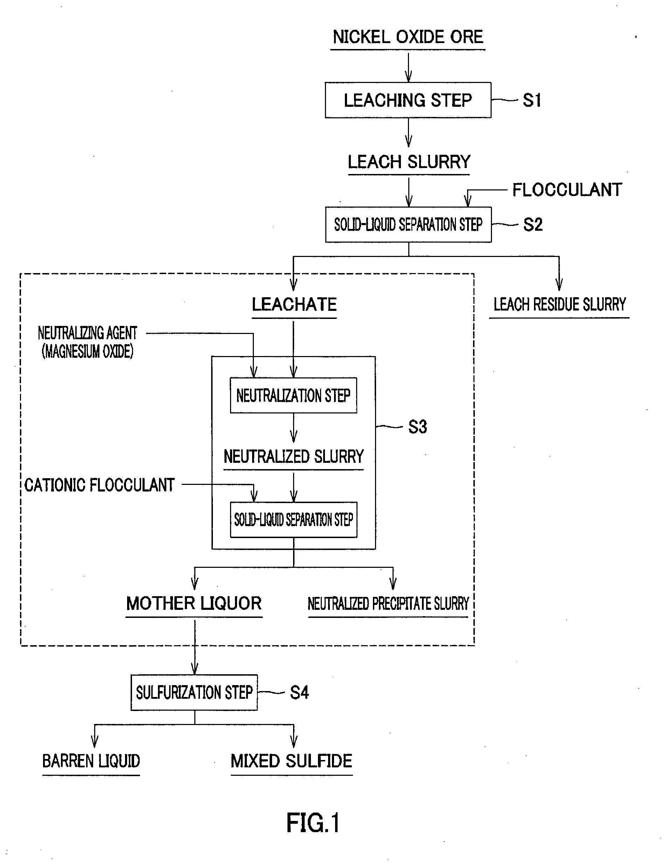

As shown in a process chart of Fig. 1, the hydrometallurgical process using a HPAL process for a nickel oxide ore includes: a leaching step S 1 in which a sulfuric acid solution is added into a slurry of a nickel oxide ore, and the resultant mixture is leached under high temperature and pressure conditions; a solid-liquid separation step S2 in which leach residues are separated while the leach slurry is multi-stage washed, and a leachate containing impurity elements together with nickel and cobalt is obtained; a neutralization step S3 in which the pH of the leachate is adjusted to neutralize excess acid in the leachate, and further the neutralized precipitate containing impurity elements is separated and removed to obtain a neutralized final solution containing nickel and cobalt; and a sulfurization step S4 in which the neutralized final solution is subjected to a sulfurization step to form a mixed sulfide containing nickel and cobalt.

### (1) Leaching step

In a leaching step S1, by using a high temperature pressure vessel (autoclave) and the like, a sulfuric acid solution is added into a slurry of a nickel oxide ore, and the resultant mixture is subjected to a stirring step at a temperature of 220 to 280°C to form a leach slurry including leach residues and a leachate.

Examples of the nickel oxide ore include a so-called laterite ore mainly such as a limonite ore and a saprolite ore. The content of nickel in the laterite ore is generally 0.8 to 2.5% by weight, and the nickel is contained as a hydroxide or a calcium silicate (magnesium silicate) ore. Further, the content of iron is 10 to 50% by weight, and the iron is mainly in a form of a trivalent hydroxide (goethite), and divalent iron is partly contained in the calcium silicate ore. In addition, in a leaching step S1, in addition to such a laterite ore, an oxide ore containing a valuable metal such as nickel, cobalt, manganese, copper, and the like, for example, manganese nodules existing on the deep sea bottom, and the like are used.

### (2) Solid-liquid separation step

In a solid-liquid separation step S2, a leach slurry formed in a leaching step S1 is subjected to multi-stage washing, and separated into a leachate containing nickel and cobalt, and leach residues. In the solid-liquid separation step S2, for example, an anionic or nonionic (weak anionic) flocculant is added into a leach slurry, and the resultant mixture is subjected to a solid-liquid separation step.

### (3) Neutralization step

In a neutralization step S3, a neutralization step is performed in which a neutralizing agent is added into a leachate to neutralize the excess acid in the leachate, and further an impurity component such as trivalent iron contained in the leachate is made into a neutralized precipitate, while inhibiting the oxidation of the leachate. Further, in the neutralization step S3, the neutralized precipitate in the slurry after neutralization step (neutralized slurry), which is obtained by the neutralization step, is subjected to settling separation, and then subjected to a solid-liquid separation step by using a solid-liquid separator such as a thickener to separate and remove the neutralized precipitate. As a result, a neutralized precipitate slurry, and a neutralized final solution that is to be a mother liquor for the recovery of nickel and cobalt are obtained.

In the present embodiment, in the neutralization step S3, it is characterized in that a neutralization step is performed by using a magnesium oxide as a neutralizing agent, and further a solid-liquid separation step in which the neutralized precipitate is separated and removed by the addition of a cationic flocculant into the final neutralized slurry is performed. Details will be described later.

### (4) Sulfurization step

In a sulfurization step S4, hydrogen sulfide gas is blown into a neutralized final solution that is a mother liquor for the recovery of nickel and cobalt, as a result, a mixed sulfide containing nickel and cobalt (nickel-cobalt mixed sulfide), which has less impurity components, and a barren liquor (solution after sulfurization) in which a nickel concentration is stabilized at a low level are obtained. It is noted that in the sulfurization step S4, in a case where zinc is contained in a mother liquor for the recovery of nickel and cobalt, prior to the separation of nickel and cobalt as sulfides, zinc can selectively be separated as a sulfide.

Further, in the sulfurization step S4, a slurry of the obtained nickel-cobalt mixed sulfide is subjected to a settling separation step by using a settling separation apparatus such as a thickener, the nickel-cobalt mixed sulfide is separated and recovered from the bottom of the thickener, and further the aqueous solution component is overflowed and recovered as a solution after sulfurization.

### <3. Settling separation process for neutralized slurry>

As described above, in a hydrometallurgical process for a nickel oxide ore, a leach slurry generated in a leaching step S1 is subjected to solid-liquid separation in a solid-liquid separation step S2, as a result, a leachate is obtained. In addition, the leachate is subjected to a neutralization step in a neutralization step S3, as a result, the neutralization of the excess acid contained in the leachate and the separation and removal of the impurity components contained in the leachate are performed.

At this time, in the present embodiment, in the neutralization step S3, a neutralization step using a magnesium oxide as a neutralizing agent, and a solid-liquid separation step adding a cationic flocculant into the final neutralized slurry are performed.

### <3-1. Neutralization step>

In a neutralization step S3 in the present embodiment, a magnesium oxide is added as a neutralizing agent into a leachate containing nickel and cobalt, which is obtained by solid-liquid separation of a leach slurry to perform a neutralization step. By the neutralization step, the neutralization for the excess acid in the leachate and the hydroxylation (precipitation) of the impurity components contained in the leachate are performed, as a result, a slurry after neutralization step (neutralized slurry), which contains a neutralized final solution and a neutralized precipitate, is obtained.

More specifically, as a magnesium oxide used as a neutralizing agent, for example, a bed rock of a nickel oxide ore containing magnesium silicate and magnesium hydroxide, such as a saprolite ore can be used. In using a bed rock, the bed rock is ground into appropriate sizes (for example, roughly 100 to 300 mm) to be used. As described above, by using a bed rock as a neutralizing agent, the neutralization step cost can effectively be reduced.

The pH conditions in a neutralization step are not particularly limited, however, neutralization is preferably performed by the addition of a magnesium oxide so as to be pH 4.0 or less. When the pH exceeds 4.0, a hydroxide of the nickel and cobalt in a leachate is generated and contained in a neutralized precipitate, as a result, a recovery loss of these valuable metals is generated.

### <3-2. Solid-liquid separation step>

In a solid-liquid separation step, a neutralized precipitate is subjected to settling separation from the neutralized slurry obtained by the neutralization step described above, and the neutralized precipitate is separated and removed by using a solid-liquid separator such as a thickener, as a result, a neutralized final solution (solution after neutralization) that is to be a mother liquor for the recovery of nickel and cobalt is obtained.

Herein, the present inventors obtained findings that a neutralized precipitate can efficiently be formed by using a magnesium oxide as a neutralizing agent in the neutralization step described above, however, the filterability of the neutralized precipitate formed is decreased. In particular, in a case where, as a magnesium oxide, the magnesium oxide obtained by the grinding of a bed rock of a nickel oxide ore such as a saprolite ore is used, since a large amount of amorphous silica is contained in the bed rock, when a neutralization step is performed by using the ground one as a neutralizing agent, the clarity in a supernatant of the neutralized final solution is decreased, and the filterability is significantly lowered.

Therefore, in a neutralization step S3 in the present embodiment, it is characterized in that a cationic flocculant is added into a neutralized slurry to perform solid-liquid separation. Although the detailed mechanism is not clear, it is considered that the surface charge of amorphous such as amorphous silica can be changed by the addition of a cationic flocculant into the neutralized slurry obtained by a neutralization step using a magnesium oxide. Consequently, it is considered that the flocculation of a neutralized precipitate is promoted to improve the filterability, and further the generation of SS (suspended solid) from the neutralized precipitate is prevented, as a result, the filtration failure such as clogging of filter cloth, which is caused by SS, can be inhibited.

As described above, in the present embodiment, a cationic flocculant is added into a neutralized slurry to perform a solid-liquid separation step, as a result, a neutralized precipitate (residue) that is excellent in the filterability can be obtained, and the neutralized precipitate can effectively be separated and removed.

The cationic flocculant is not particularly limited, and a cationic flocculant commonly used can be used. Specifically, examples of the cationic flocculant include a polyacrylate-based polymer, a polymethacrylate-based polymer, a polyamine-based polymer, a dicyandiamide-based polymer, a polyacrylamide-based polymer, and a vinyl formaldehyde-based polymer.

The additive amount of the cationic flocculant is in the range of 650 to 1350 g/t with respect to a solid content. Herein, in general, the SS concentration in the neutralized final solution is preferably controlled to a concentration of less than 100 mg/L, and more preferably controlled to a concentration of 50 mg/L or less, and when the SS concentration is controlled to less than 10 mg/L, there are no problems with the clarity, and it is considered that the filterability is enhanced. In this respect, the additive amount of the cationic flocculant falling within the range of 650 to 1350 g/t allows the SS concentration to be decreased to 100 mg/L or less, and a mother liquor (mother liquor for the recovery of nickel and cobalt) with high clarity to be obtained. Further, as described above, effective decreasing in the SS concentration makes it possible to the clogging of filter cloth, and the like to be prevented during the filtration step, and the filterability to be further improved.

Furthermore, the additive amount of the cationic flocculant is preferably in the range of 750 to 1200 g/t, and furthermore preferably in the range of 900 to 1100 g/t with respect to a solid content. Setting of the additive amount in such a range makes the filtering speed even faster, and the neutralized precipitate effectively separated and removed while inhibiting the filtration failure. Further, the setting of the additive amount in the range described above makes it possible for the SS concentration to be decreased to around 50 mg/L or less, and further up to less than 10 mg/L, as a result, a mother liquor with higher clarity to be obtained.

As described above, in the present embodiment, for example, in a neutralization step in which the neutralization of the excess acid and the removal of the impurity components are performed in the leachate leached with sulfuric acid by a HPAL process, a neutralization step is performed by using a magnesium oxide as a neutralizing agent, and a cationic flocculant is added into the final neutralized slurry to separate and remove a neutralized precipitate. Consequently, an efficient neutralization step can be performed, and further the filterability of the neutralized precipitate formed is improved, as a result, the separation and removal can effectively be performed onto the solid side by a solid-liquid separator such as a thickener.

Further, by the control of the additive amount of the cationic flocculant to be added into a neutralized slurry, the SS concentration in a neutralized final solution (supernatant) can effectively be decreased, the clogging of filter cloth and the like is prevented and the filterability is further improved, and further a mother liquor for the recovery of nickel and cobalt with high clarity can be obtained.

### Examples

Hereinafter, Examples of the present invention will be described, however, the present invention is not limited to the following Examples.

### [Investigation of settling separation effect of neutralized precipitate]

A nickel oxide ore was leached with sulfuric acid by a HPAL process, a neutralization step was performed by using a magnesium oxide (magnesium silicate and magnesium hydroxide) for the leachate obtained by solid-liquid separation, and the neutralization of the excess acid and the removal of the hydroxides of impurity components were performed in the leachate. According to the neutralization step, a neutralized slurry containing a mother liquor and a neutralized precipitate was obtained.

After that, 100 mL of the final neutralized slurry was transferred to a graduated cylinder with scale marks up to 100 mL, a flocculant shown in a list of the following Table 1 was added at a level (additive amount) shown in the following Table 2, and the resultant mixture was shaken up and down three times and then left to stand to perform solid-liquid separation. 50 mL of the supernatant was collected 30 minutes after the standing, and was subjected to suction filtration at 100 torr in the filtering area of 17.3 cm² by using a membrane filter made of cellulose with a pore size of 0.45 µm.

Measurement results of the SS (suspended solid) concentration and filtration time at this time are shown in the following Table 2. Further, the SS concentration and filtration time of the leachates (mother liquors) before and after the neutralization step are also shown in the Table 2 as a comparison.

**[Table 1]**

| Model number | Manufacturer | Type | Dilution concentration (% by weight) |
|---|---|---|---|
| PN802 | Kurita Water Industries Ltd. | Nonionic | 0.03 |
| PA804 | Kurita Water Industries Ltd. | Anionic | 0.03 |
| FL45C | SNF Floerger | Cationic | 1.0 |

**[Table 2]**

| | Flocculant | Additive amount (g/t solid content) | SS concentration (mg/L) | Filtration time (seconds) |
|---|---|---|---|---|
| Leachate | Before neutralization pH0.5 | | 142 | 9 |
| Mother liquor | After neutralization pH3.0 | | 102 | 1640 |
| Test Example 1 | PN802 | 200 | 86 | 2092 |
| Test Example 2 | PA804 | 200 | 46 | 2280 |
| Test Example 3* | FL45C | 500 | 150 | 60 |
| Test Example 4 | FL45C | 900 | 4 | 15 |
| Test Example 5* | FL45C | 1400 | 124 | 68 |

| | | | | |
|---|---|---|---|---|
| *Reference Example | | | | |

As shown in Table 2, from the results of the filtration time of a leachate before neutralization step and the filtration time of a mother liquor after neutralization step, it was found that the impurities contained in a leachate are effectively precipitated and can be made into a neutralized precipitate by a neutralization step using a magnesium oxide as a neutralizing agent.

Next, with respect to the separation and removal of the neutralized precipitate formed in such a manner, from the results of Test Examples 1 and 2, in the nonionic flocculant and the anionic flocculant, the separation effect on a neutralized precipitate was low, and the neutralized precipitate remained in the supernatant as SS. As a result, the filtration time was 2000 seconds or more, and the filtration failure was generated, therefore, the neutralized precipitate could not effectively be removed. On the other hand, in a case where a cationic flocculant was added, it was found that the filtration time is significantly faster, and the neutralized precipitate can effectively be separated and removed.

From this, it was found that a cationic flocculant is added into the neutralized slurry obtained by a neutralization step for a leachate using a magnesium oxide as a neutralizing agent to separate a neutralized precipitate, as a result, the separation and removal can effectively be performed while inhibiting the filtration failure.

### [Investigation of additive amount of cationic flocculant]

Next, when the additive amount of the cationic flocculant is changed as shown in the following Table 3 for the neutralized slurry obtained by a neutralization step for a leachate, the SS concentration and filtration time in the neutralized final solution (mother liquor) were measured.

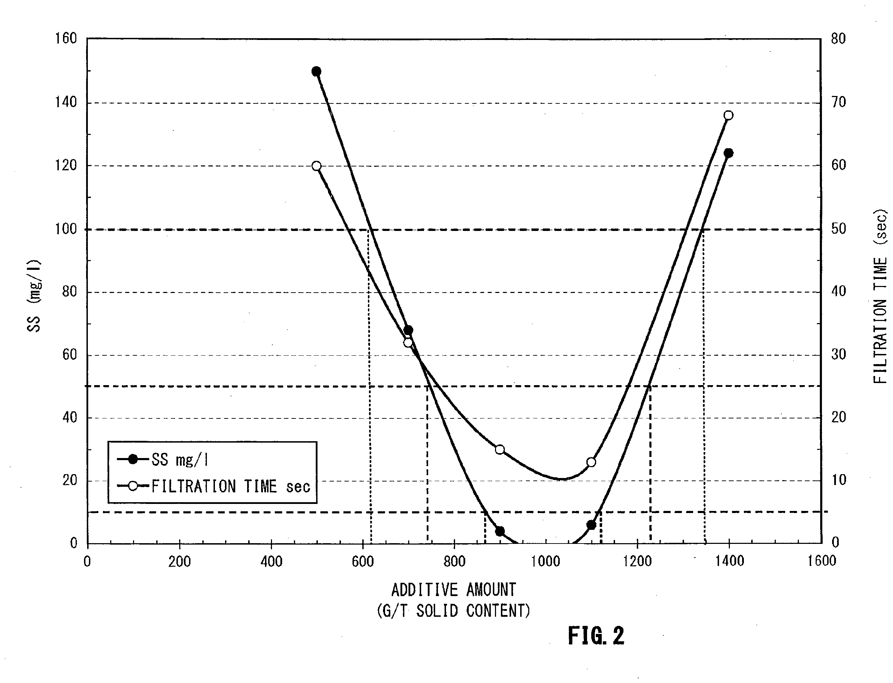

The measurement results are shown in Table 3. In addition, in Fig. 2, a graph showing the relationship between the SS concentration (mg/L) for the additive amount of a cationic flocculant, and the filtration time (seconds).

**[Table 3]**

| | Flocculant | Additive amount (g/t solid content) | SS concentration (mg/L) | Filtration time (seconds) |
|---|---|---|---|---|
| Test Example 6* | FL45C | 500 | 150 | 60 |
| Test Example 7 | FL45C | 700 | 68 | 32 |
| Test Example 8 | FL45C | 900 | 4 | 15 |
| Test Example 9 | FL45C | 1100 | 6 | 13 |
| Test Example 10* | FL45C | 1400 | 124 | 68 |

| | | | | |
|---|---|---|---|---|
| *Reference Example | | | | |

As can be seen from the results shown in Table 3 and Fig. 2, it was found that a neutralized precipitate is subjected to filtration separation by the addition of a cationic flocculant, as a result, the separation and removal can effectively be performed while inhibiting the filtration failure, however, when the additive amount exceeds 1350 g/t (solid content), the filtration time is slightly longer. Further, it was found that also in a case where the additive amount is less than 500 g/t (solid content), the filtration time is similarly slightly longer. In addition, it was found that in the additive amount exceeding the 1350 g/t (solid content), and in the additive amount less than 500 g/t (solid content), the SS concentration in a mother liquor is increased.

On the other hand, it was found that when the additive amount of a cationic flocculant is in the range of 650 to 1350 g/t (solid content), the filtration time is 60 seconds or less, and the SS concentration in a mother liquor is also a preferred value of 100 mg/L or less. Further, it was found that when a cationic flocculant is added in the range of 750 to 1200 g/t (solid content), the filtration time is faster of around 30 seconds or less, and the SS concentration in a mother liquor also is a low concentration of 50 mg/L or less. In addition, it was found that when a cationic flocculant is added in the range of 900 to 1100 g/t (solid content), the filtration time is extremely faster of 15 seconds or less, and the SS concentration in a mother liquor is also an extremely low concentration of less than 10 mg/L.

From this, it was found that when the additive amount of a cationic flocculant is in the range of 650 to 1350 g/t (solid content), preferably in the range of 750 to 1200g/t (solid content), and furthermore preferably in the range of 900 to 1100 g/t (solid content), a neutralized precipitate is effectively separated and removed while inhibiting the filtration failure, and further a mother liquor (mother liquor for the recovery of nickel and cobalt) with high clarity can be obtained.

## Claims

1. A settling separation process for a neutralized slurry obtained by performing a neutralization step for a leachate obtained by leaching of nickel and cobalt from a nickel oxide ore, comprising:
performing a neutralization step for the leachate by using a magnesium oxide to obtain a neutralized slurry; and
separating and removing a neutralized precipitate by adding a cationic flocculant into the neutralized slurry;
wherein an additive amount of the cationic flocculant is 650 to 1350 g/t (solid content) with respect to a solid content of a leach slurry.

2. The settling separation process for a neutralized slurry according to Claim 1, wherein
the magnesium oxide is a magnesium oxide obtained by grinding a bed rock of the nickel oxide ore.

3. The settling separation process for a neutralized slurry according to Claim 1, wherein
the leachate is a leachate obtained by leaching nickel and cobalt from the nickel oxide ore by a high-temperature high-pressure acid leaching process using a sulfuric acid solution.

4. The settling separation process for a neutralized slurry according to Claim 1, wherein
the additive amount of the cationic flocculant is 900 to 1100 g/t (solid content) with respect to a solid content of a leach slurry.

5. A hydrometallurgical process for a nickel oxide ore in which recovery of nickel and cobalt from a nickel oxide ore is performed by a high-temperature high-pressure acid leaching process containing a leaching step, a solid-liquid separation step and a neutralization step, the neutralization step, comprising the settling separation process according to claim 1.

6. The hydrometallurgical process for a nickel oxide ore according to Claim 5, wherein
the magnesium oxide is a magnesium oxide obtained by grinding a bed rock of the nickel oxide ore.

7. The hydrometallurgical process for a nickel oxide ore according to Claim 5, wherein
the additive amount of the cationic flocculant is 900 to 1100 g/t (solid content) with respect to a solid content of a leach slurry.

## Patentansprüche

1. Absetztrennverfahren für eine neutralisierte Aufschlämmung, erhalten durch das Durchführen eines Neutralisationsschritts für einen Auszug, erhalten durch das Auslaugen von Nickel und Kobalt aus einem Nickeloxiderz, umfassend:
das Durchführen eines Neutralisationsschritts für den Auszug durch das Verwenden eines Magnesiumoxids zum Erhalten einer neutralisierten Aufschlämmung; und
das Trennen und das Entfernen eines neutralisierten Niederschlags durch das Hinzufügen eines kationischen Flockungsmittels in die neutralisierte Aufschlämmung;
wobei eine hinzugefügte Menge an kationischem Flockungsmittel 650 bis 1350 g/t (Feststoffgehalt), bezogen auf einen Feststoffgehalt einer Auslaugungsaufschlämmung, beträgt.

2. Absetztrennverfahren für eine neutralisierte Aufschlämmung nach Anspruch 1, wobei
das Magnesiumoxid ein Magnesiumoxid ist, das durch das Zerkleinem eines Grundgesteins des Nickeloxiderzes erhalten wird.

3. Absetztrennverfahren für eine neutralisierte Aufschlämmung nach Anspruch 1, wobei
der Auszug ein Auszug ist, der durch das Auslaugen von Nickel und Kobalt aus dem Nickeloxiderz durch ein Hochtemperatur-Hochdruck-Säureauslaugungsverfahren unter Verwendung einer Schwefelsäurelösung erhalten wird.

4. Absetztrennverfahren für eine neutralisierte Aufschlämmung nach Anspruch 1, wobei
die hinzugefügte Menge an kationischem Flockungsmittel 900 bis 1100 g/t (Feststoffgehalt), bezogen auf einen Feststoffgehalt einer Auslaugungsaufschlämmung, beträgt.

5. Hydrometallurgisches Verfahren für ein Nickeloxiderz, bei dem die Rückgewinnung von Nickel und Kobalt aus einem Nickeloxiderz mittels einem Hochtemperatur-Hochdruck-Säureauslaugungsverfahren durchgeführt wird, das einen Auslaugungsschritt, einen Fest-Flüssig-Trennungsschritt und einen Neutralisationsschritt enthält, wobei der Neutralisationsschritt das Absetztrennverfahren nach Anspruch 1 umfasst.

6. Hydrometallurgisches Verfahren für ein Nickeloxiderz nach Anspruch 5, wobei
das Magnesiumoxid ein Magnesiumoxid ist, das durch das Zerkleinern eines Grundgesteins des Nickeloxiderzes erhalten wird.

7. Hydrometallurgisches Verfahren für ein Nickeloxiderz nach Anspruch 5, wobei
die hinzugefügte Menge an kationischem Flockungsmittel 900 bis 1100 g/t (Feststoffgehalt), bezogen auf einen Feststoffgehalt einer Auslaugungsaufschlämmung, beträgt.

## Revendications

1. Procédé de séparation par décantation pouf une boue neutralisée obtenue en réalisant une étape de neutralisation pour un lixiviat obtenu par la lixiviation de nickel et cobalt à partir d'un minerai d'oxyde de nickel, comprenant :
réaliser une étape de neutralisation pour le lixiviat en utilisant un oxyde de magnésium pour obtenir une boue neutralisée ; et
séparer et éliminer un précipité neutralisé en ajoutant un floculant cationique dans la boue neutralisée ;
dans lequel une quantité additive du floculant cationique est de 650 à 1350 g/t (teneur en solides) par rapport à une teneur en solides d'une boue d'attaque.

2. Procédé de séparation par décantation pour une boue neutralisée selon la revendication 1, dans lequel
l'oxyde de magnésium est un oxyde de magnésium obtenu en broyant un fond rocheux du minerai d'oxyde de nickel.

3. Procédé de séparation par décantation pour une boue neutralisée selon la revendication 1, dans lequel
le lixiviat est un lixiviat obtenu par la lixiviation de nickel et cobalt à partir du minerai d'oxyde de nickel par un processus de lixiviation d'acide à haute pression et haute température utilisant une solution d'acide sulfurique.

4. Procédé de séparation par décantation pour une boue neutralisée selon la revendication 1, dans lequel
la quantité additive du floculant cationique est de 900 à 1100 g/t (teneur en solides) par rapport à une teneur en solides d'une boue d'attaque.

5. Procédé hydrométallurgique pour un minerai d'oxyde de nickel dans lequel la récupération de nickel et cobalt à partir d'un minerai d'oxyde de nickel est réalisée par un processus de lixiviation d'acide à haute pression et haute température contenant une étape de lixiviation, une étape de séparation solide-liquide et une étape de neutralisation, l'étape de neutralisation comprenant le procédé de séparation par décantation selon la revendication 1.

6. Procédé hydrométallurgique pour un minerai d'oxyde de nickel selon la revendication 5, dans lequel
l'oxyde de magnésium est un oxyde de magnésium obtenu en broyant un fond rocheux du minerai d'oxyde de nickel.

7. Procédé hydrométallurgique pour un minerai d'oxyde de nickel selon la revendication 5, dans lequel
la quantité additive du floculant cationique est de 900 à 1100 g/t (teneur en solides) par rapport à une teneur en solides d'une boue d'attaque.
